# EUROPEAN PATENT SPECIFICATION

(11) **EP 3 571 036 B1**
(45) Date of publication and mention of the grant of the patent: **30.12.2020**
(21) Application number: 18702338.7
(22) Date of filing: 19.01.2018
(51) Int. Cl.: B29C 49/80, B29C 49/06, B29C 49/36, B29C 49/42

(54) **IMPROVED MACHINE FOR THE PRODUCTION OF CONTAINERS AND CHECKING METHOD**
VERBESSERTE MASCHINE ZUR HERSTELLUNG VON BEHÄLTERN UND PRÜFUNGSVERFAHREN
MACHINE AMÉLIORÉE POUR LA PRODUCTION DE CONTENANTS ET PROCÉDÉ DE VÉRIFICATION

(30) Priority: 20.01.2017 IT 201700006070
(43) Date of publication of application: 27.11.2019
(73) Proprietor: Verve SpA, 21040 Vedano Olona (VA) (IT)
(72) Inventor: VERSIGLIA, Pierfilippo, I-21040 Venegono Inferiore (VA) (IT)
(74) Representative: Lampis, Marco
(86) International application number: PCT/IB2018/050332
(87) International publication number: WO 2018/134772

(56) References cited:
- WO-A1-01/02158
- DE-U1- 8 913 346
- GB-A- 1 237 344
- JP-A- H03 278 936

## Description

The present invention relates to an improved machine for blow-molding thermoplastic materials, in particular a molding machine for stretch blow-molding or for injection stretch blow-molding, intended for the production of containers made of thermoplastic material. Machines and methods representative of the technological background are described in the patent documents GB1237344A and WO01/02158A1.

The machines and associated method for the production of containers made of thermoplastic material, such as phials, flasks and bottles of various sizes, are well-known. Below such containers will all be indicated, without distinction, by the term "bottle" for easier description, without a limiting meaning being intended in any way. This term will be understood basically as referring to a container having a neck-like mouth, as will become clear below.

These containers may be made using one or more thermoplastic materials. Some of these materials include polyethylene terephthalate (PET), also of a recycled nature, polypropylene (PP), polycarbonate (PC), polylactic acid (PLA), polyethylene naphthalate (PEN) and polystyrene (PS). Other plastic materials known to be used in the production containers by means of stretch blow-molding may also be used. Below general reference will be made to the materials which may be used, indicating them all, without distinction, by the term "plastic material" for easier description, without a limiting meaning being intended in any way.

In a manner known per se, the method for production of a given type of bottle involves the preparation of a special preform of suitable plastic material. The preform, which is usually made by means of injection, comprises a neck and a hollow body. The mouth of the preform, which is formed by the final section of the container close to the opening, is already identical to that of the bottle in its final form and, for example, comprises the means for engagement with the stopper or cap (for example a thread for screwing on the cap). The hollow body instead is much smaller than the finished bottle, but comprises all the plastic material necessary for production thereof, distributed in walls of relatively large thickness. During preparation of the preform, therefore, the quantity of material used for the bottle, as well as the type of material in terms of composition, color, etc., are defined.

The mouth is the strongest part of the bottle since it must withstand the forces resulting from engagement with the stopper or cap, whatever form the latter may have. For this reason, and because the mouth maintains the same form from the start to the end of production, during all the processing stages carried out in the machine for producing the bottle from the preform, the preform is gripped and handled via the mouth.

The bottle production machine may receive the preform from the outside and therefore only the stretch blow-molding operations are performed in the machine, or the machine may comprise initial stations for producing also the preform from plastic material (for example from granules of plastic material) and therefore the machine performs the injection and stretch blow-molding operations.

Although the stretch blow-molding production method (including also optionally the initial injection operation) is widespread and well-established, it is not devoid of drawbacks.

In fact the production method described above does not ensure production which is entirely free from leakage defects. There are various factors which may result in a leakage defect in the finished bottle: defects present in the preforms due to problems occurring during injection, possible local defects in the material, different local temperatures of the material during blow-molding, etc.

The leakage defects are usually due to holes or microscopic holes which are formed in the bottle wall during the stretch blow-molding operations and which, if not detected, result in product leakage which is evident only after final filling of the bottle. As may be easily imagined, product leakage on the filling line may create major problems along this line, in particular if the product is a liquid which has particular aggressive, soiling or similar characteristics.

It would therefore be preferable for all the bottles to be tested before filling them so as to highlight any problems of leak-tightness.

For example, if the bottles are to be sold to a client who will carry out the filling process it would obviously be preferable for the bottles which are produced to be checked before they are packaged and sent to the client who will fill them.

Various checking systems have been proposed in the prior art in order to test the leak-tightness of the bottles produced.

A first known method for intercepting and eliminating the defective bottles consists of a visual check carried out manually by an operator. This method is not defect-free.

A first defect of this manual inspection method is the labor cost involved. The presence of at least one operator dedicated to carrying out exclusively this task during the whole of production is in fact required. In order to achieve high production output several operators working simultaneously may also be required.

Moreover, this type of manual inspection, no matter how carefully performed, cannot guarantee elimination of all the defective bottles. The efficiency of this method depends in fact to a large extend on the expertise and the attentiveness of the individual operator, these being factors which can be only partially determined beforehand. Moreover, there are defects which not even the most attentive and careful operator may detect when carrying out only a visual check. There are in fact defects which are literally invisible owing to the extremely small dimensions and/or the specific form of the defect.

According to a second known inspection method, a special checking station is installed downstream of the production machine, for example along an output line for conveying the bottles out of the machine. In general, such a checking station has a stoppage area where each single bottle is stopped so that it may be checked. An actuator lowers a test stopper or cap so that it rests on the mouth of the bottle. The specific form of the stopper or cap and the pressure applied by the actuator ensure the leak-tightness. By means of the test stopper or cap air under pressure is introduced inside the bottle, while a control circuit checks the volume and/or pressure of the air introduced. If the volume of the air introduced exceeds a predetermined value and/or if the pressure of the air introduced does not manage to exceed a predetermined value it is presumed that there is a defect in the bottle. The control circuit therefore signals the defect and the bottle is eliminated from the output line. This inspection method is also not defect-free.

A first defect of this automatic inspection method is its relative slowness. The station described above may take for the checking the single bottle more time than that which is taken by the machine upstream in order to produce it. This drawback may obviously be overcome by multiplying the number of work areas inside the checking station so that several bottles may be checked with a single operation. This solution, however, results in an increase in the complexity and the costs of the checking station.

A second and more serious defect of this automatic inspection method is described below. As mentioned initially, the single production line may produce phials, flasks and bottles of various shapes and sizes. The only part which is subject to standardization is the mouth, for which few standards have been defined. On the other hand, the form, height, width and rigidity of the bottles may vary greatly from one production batch to the next. As the person skilled in the art may easily understood, the adjustment of the checking station must be performed depending on the specific form of the bottles in each single production batch. For example: the height of the bottle on the output line determines by how much the actuator must lower the test stopper or cap; the overall rigidity of the bottle determines the maximum pressure which the actuator may apply to the test stopper or cap, etc. The variability of these parameters therefore involves a long operation for adjustment and calibration of the checking station. Moreover, the downwards movement of the stopper or cap may easily cause the bottle to fall, in particular when the bottle is very narrow and tall and/or if it is not positioned stably in the associated work area.

If a bottle falls over the line must be stopped immediately and an operator must intervene in order to manually rearrange the bottle in the correct position.

Moreover, it may happen that the leak-tightness defect is due to a hole located on the bottom of the bottle. Since the bottles reach the testing system moving along a conveyor line on which they must be necessarily arranged, the downwards thrust produced on the neck by the testing device may cause temporary closing of the hole, such that the bottle passes the test successfully even though it is defective.

Moreover, some bottles may easily give way under the vertical thrust of the testing system, being permanently deformed, such that a bottle which is not defective from the point of view of leak-tightness in any case becomes defective in visual terms and this defect may not be noticed until after filling, making the final product unacceptable for the purchaser.

In order to solve or at least partially overcome these problems, the testing system must operate even more slowly, increasing on the other hand the problems due to the slowness of the testing system.

However the test is performed downstream of production, there may also be a problem of traceability, namely a problem of not managing to identify the production machine in which the defect occurred. In fact, in the case of high production outputs, generally there are several machines present which produce the same type of bottle, and the bottles output from the various machines are conveyed on a single conveying system so that they can be grouped together and packaged. If the defect is due to malfunctioning of a specific production machine, it may take a relatively long time to trace this machine and take it out of service so that it can be repaired.

Moreover, if the defects are detected after the production stage and if these defects are caused by the malfunctioning of a specific production machine, it may happen that the defect is detected only after the machine has produced a large number of defective bottles.

The general object of the present invention is therefore to overcome at least partially the drawbacks mentioned above with reference to the prior art.

In particular, a task of the present invention is to provide a work station and an inspection method which are able to overcome the drawbacks of the prior art.

Moreover, a task of the present invention is to provide a work station and a checking method which are compatible with the existing blow-molding machines and plants so as not to alter operation thereof.

Finally, a task of the present invention is to provide a blow-molding machine and plant which allow efficient checking of the defects on the finished products.

In view of these objects and tasks the idea which has occurred is to provide, according to the invention, a machine for the production of bottles by means of stretch blow-molding of preforms, comprising a sequence of processing stations starting with a station for receiving at least one preform for insertion thereof in a mold and ending with a station for releasing the corresponding bottle produced, gripping means being movable between the stations so as to grip the at least one preform in the receiving station and transport it between the processing stations for converting it into the bottle by means of stretch blow-molding and as far as the release station, characterized in that it comprises, after the processing stations and before the machine outlet, a checking station in which the following are present: gripping means for holding the bottle by its neck; a test probe with means designed to seal the mouth of the bottle; pressure means for introducing into the bottle a pressurized fluid through the test probe; measurement means designed to measure at least one significant parameter of the pressurized fluid supplied to the bottle; a control circuit designed to receive the measurement of the at least one parameter from the measurement means, compare this result with a predetermined reference value and signal any anomalies arising from the comparison and indicating a loss of leak-tightness of the bottle.

Still according to the principles of the invention, the idea which has also occurred is to provide an automatic method for checking bottles in a machine for the production of preforms by means of stretch blow-molding, comprising, after formation of the bottle and before exiting of the bottles from the machine, the following checking steps: gripping the mouth of the bottle; sealing the mouth; introducing a pressurized fluid inside the bottle; measuring at least one significant parameter of the pressurized fluid supplied to the bottle; comparing this measurement with a predetermined reference value; and automatically signaling any discrepancies arising from the comparison.

The characteristic features of the machine and the method according to the invention are defined in the independent claims.

The characteristic features and further advantages of the invention will emerge from the description, hereinbelow, of a number of examples of embodiment, provided by way of a nonlimiting example, with reference to the accompanying drawings. In the drawings:
- Figure 1 shows a schematic plan view of an example of a possible molding machine designed according to the invention;
- Figure 2 shows a schematic side elevation of the machine according to Figure 1;
- Figures 3 and 4 show in schematic form schematic, partial and partially sectioned views of a possible embodiment of a checking station according to the invention, in a rest position and checking position, respectively;

- Figure 5 shows a schematic plan view of the checking station according to Figure 3;
- Figure 6 shows a schematic side view of the checking station according to Figure 3;
- Figure 7 shows a larger-scale and partially sectioned schematic view of a test probe of the checking station;
- Figures 8 and 9 show partially sectioned schematic views of a testing end of the probe according to Figure 1, in two different conditions;
- Figure 10 shows a schematic larger-scale and partially sectioned view of a possible variation of embodiment of the test probe.

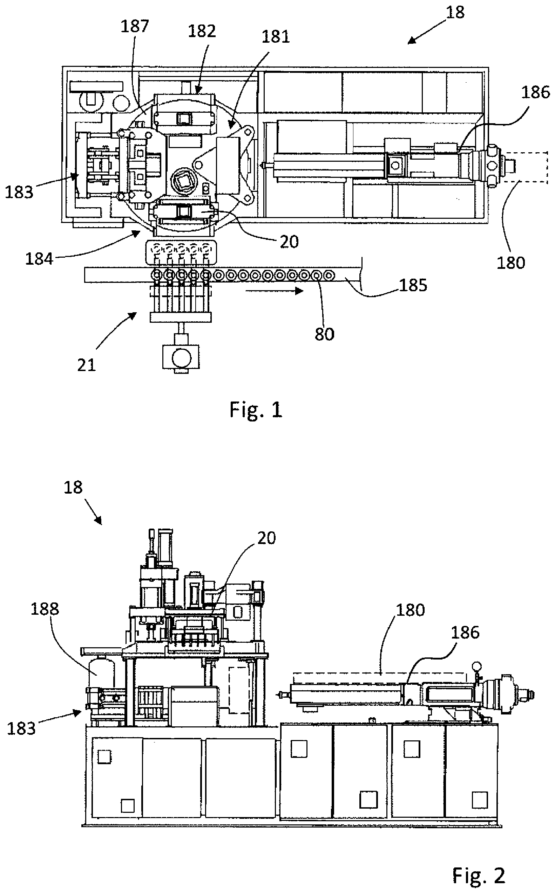

With reference to the figures, Figure 1 shows in schematic form a stretch blow-molding or injection stretch blow-molding machine, denoted generically by 18, comprising the solution according to the present invention.

Stretch blow-molding or injection stretch blow-molding technology and the stations which in a machine implement said technology are substantially known and may be easily imagined by the person skilled in the art and will therefore not be described or illustrated in detail here. The blow-molding machine 18 usually comprises a plurality of known molds 188 which move between a plurality of suitable known processing stations.

The machine 18 receives at its input the preforms or the plastic material from which the preforms are obtained and, in turn, releases the finished bottles. In the first case, the preforms may be supplied by a special known supply line 180 which conveys preforms which have already been produced beforehand, or, in the second case, the preforms may be produced as and when needed, for example in an injection-molding station 186 known per se.

Below, for the sake of simplicity, the mold of the machine 18 is considered to be a five-cavity mold. Obviously the mold may contain a different number of cavities, such as to receive or produce simultaneously a different number of preforms and release a corresponding number of finished bottles 80.

As may be easily imagined by the person skilled in the art, the number of stations may be different depending on the specific processing operation. Below, reference will be made for the sake of convenience to a four-station machine.

The system for conveying the bottles which are being formed inside the machine comprises, as is known, a system for gripping the neck 81 of the bottle starting with the preform, such that this neck (generally provided, for example, with a thread or other system for engagement of the future stopper or cap of the bottle) remains gripped in this gripping system along the entire travel path as far as the bottle discharging station, where the gripping system opens in order to release the formed bottle.

In a first station or receiving station 181 all the preforms of a set of preforms entering from the supply line or from the preform molding station are gripped by the gripping system, which retains them via their necks 81. The system for gripping the neck 81 thus moves in synchronism with the molding operations inside the machine between one station and another. The set of preforms is then inserted in a mold inside the machine. The mold, formed by one or more hollow parts, defines the final form of the bottle. Here the term "mold" defines obviously also any multiple mold, namely for example a mold with several seats, each for forming a bottle, or also several separate mold parts, each with a seat for forming a bottle and moving together between the stations of the machine.

In a processing station or heating station 182, the preforms are heated to a temperature at which the plastic material used (for example PET) softens and becomes easily workable. This temperature may be easily determined by the person skilled in the art from the technical literature or by means of specific tests.

In a further successive processing station or stretch blow-molding station 183, a high-pressure fluid (typically air) is blown in through the mouth 82 of the neck 81 of each preform so as to stretch the walls of the preform until they adhere to the mold. The bottle is thus made, in its definitive form.

Finally, the mold is opened and, in a final or cooling station 184, cooling of the bottles in the set starts with the bottles being retained by their necks in the gripping system. Cooling causes the material to harden further in the form which has been imparted to it.

At the end of these processing steps, the bottle is finished and is released by the machine onto the output line 185 which transports the finished bottles to the following processing and/or packaging stations.

In accordance with a particularly advantageous embodiment, the stations are arranged (for example in a square shape) along the travel path of a circular carousel 187 which rotates moving a series of molds (for example, consisting of a number equal to the number of stations) from one station to the next station. In this way, usually all the stations are simultaneously occupied by a mold of the series and the molds all move simultaneously stepwise between one station and the next.

The cycle time is determined by the longer of the processing steps. In fact, each mold remains inside each station for the time needed to perform the longest of the processing operations which are performed simultaneously. Once all the stations have been passed through, the empty mold is brought back to the first station and the production cycle starts again. As the person skilled in the art may well understand, the last station 184 is also a discharge station where in the prior art substantially no further processing is generally performed, but the bottle is only cooled and extracted so that it may be conveyed away from the machine. This station is therefore usually also a station for discharging or releasing the bottles.

In the machine which applies the principles of the present invention there is a station, arranged at the end of the sequence of processing stations, which has the function of checking the leak-tightness of the bottles. Preferably, this checking station is formed directly in the output or discharge station 184.

In the checking station there is a unit for checking the bottles, indicated generically by 20, and preferably a discharging and reject system 21 (in Figure 2 the discharging system has been omitted for greater clarity).

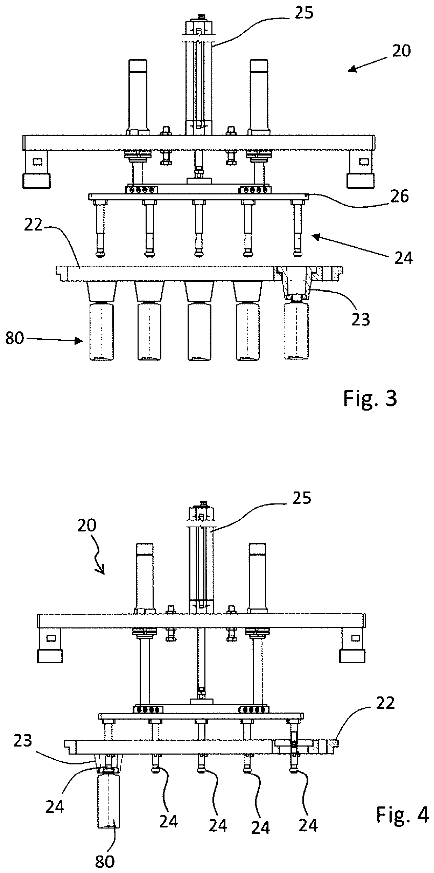

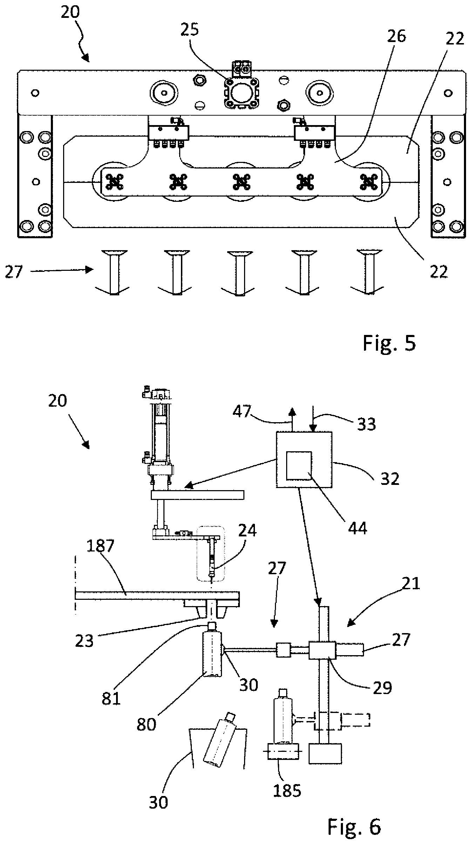

Figures 3 and 4 show in greater detail the checking unit 21. These figures also show the main part of the gripping system (indicated generically by 22) which, by means of shaped jaws 23, retains the neck of each bottle 80 starting from the first station (where the bottle is still a preform) until the last station is reached. This part of the gripping system is advantageously formed as two parallel sections which (as shown schematically in the closed position in Figure 5 and in the open position in Figure 6) move so as to grip or release at the same time the neck of all the bottles in the set. Opening and closing means (not shown, for example pneumatic cylinders) control these movements.

As can be clearly seen from the cross-section in Figure 3, the shaped jaws 23 may be removable or replaceable so as to adapt rapidly the machine to a different shape and/or size of the neck.

The gripping system 22 will be advantageously mounted on the carousel which displaces it between the stations together with the molds.

The checking unit 20 comprises a test probe 24 for each bottle in the set of bottles gripped inside the gripping system 22 movable between the stations. The test probes are displaceable controllably from a non-operative position (raised in Figure 3) and an operative position (lowered in Figure 4, where for greater clarity some of the jaws 23 have been omitted). In the operative position the probes sealingly engage with the mouth of the neck of the bottles which are retained by the gripping system 22. The movement between the two positions is obtained for example by a piston 25 which controls the movement of a frame 26 carrying all the test probes 24.

Figure 6 shows schematically in greater detail also the discharging and reject system 21. This system comprises advantageously a pick-up device 27 (advantageously of the sucker type) which is movable between a first position (shown in solid lines in Figure 6) for taking hold of the bottles in the gripping system, before it opens, and a second position (shown in broken lines in Figure 6) for depositing the bottles on a conveyor of the output line 185.

In order to be able to move between the two positions the pick-up device 27 may advantageously have a first actuator 28 and a second actuator 29. The first actuator moves horizontally the gripping ends 30 of the pick-up device between the position against the bottles in the gripping system 22 and the vertical above the output line 185. The second actuator (for example in the form of a carriage) moves instead vertically so as to move the gripping ends of the pick-up device between the level for picking up the bottles in the gripping system 22 and the level for discharging the bottles onto the output line 185.

A further position 31 for rejecting the bottles is also present, being preferably situated below or close to the vertical of the zone for picking up of the bottles by the pick-up device. In the reject position a container which receives the rejected bottles may be advantageously provided.

The checking unit and the discharging and reject system may be advantageously operated by a control system 32 (structure known per se, for example consisting of an appropriate, suitably programmed, microcontroller unit) which may also receive signals 33 from a known per se general machine control system (not shown) for synchronizing its operation with the movements and the molding process performed by the machine. Alternatively, the control system 32 may also be integrated in the general control system of the machine, as at this point may be easily imagined by the person skilled in the art.

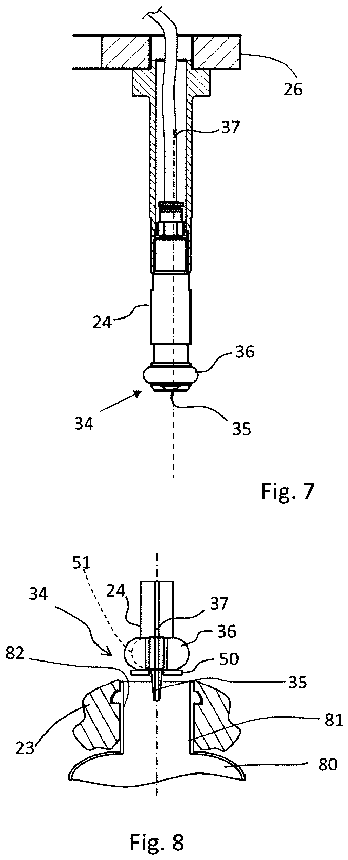

Figure 7 shows in greater detail a possible advantageous embodiment of the test probe 24. The test probe 24 comprises a free end 34 which is provided with at least one nozzle 35 for emitting a test fluid (normally air) and a sealing element or stopper 36 suitable for sealing the mouth 82 of a bottle.

A pipe 37 conveys, upon operation, the test fluid to the nozzle 35.

The sealing element 36 is advantageously in the form of a radially expandable body or ring for forming a seal on the inner walls of the neck 81 of the bottle. Since the neck of the bottle is retained inside the jaws 23, this solution has been found to be particularly advantageous for ensuring an optimum seal without deformations of the bottle.

The expandable ring will have a diameter suitable being inserted inside the mouth 82 of the bottle and for being then radially expanded so as to seal it.

One way of radially expanding the body 36 is that of designing it with an elastic form and compressing it in the axial direction by means of a suitable actuator (not shown) contained in the test probe, as will be explained below.

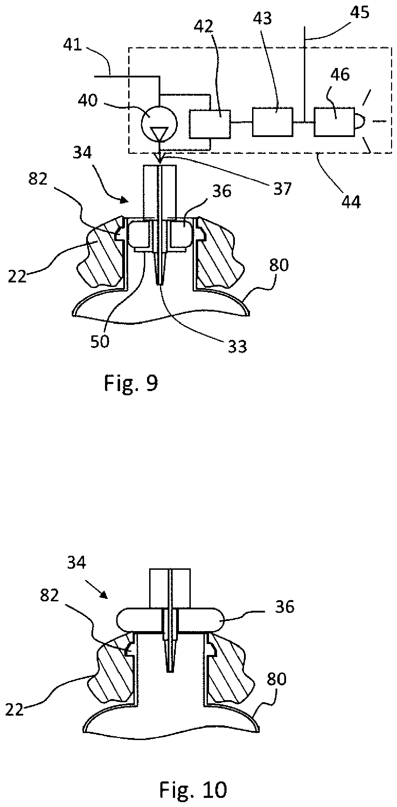

This is shown by way of example in Figure 8, where compression ends 50 of an axial actuator (not shown) are retractable axially against the elastic ring 36 so as to expand it radially (Figure 9 shows the action of these compression ends, with the expanded elastic ring which forms the seal against the inner wall of the bottle neck).

Another way of obtaining the radial expansion of the body 36 may be that of designing it with an elastic form with an air chamber inside it (indicated by 50 in broken lines again in Figure 8) and controllably supplying pressurized fluid therein. This second system may take advantage of the presence, within the station 20, of a system suitable for supplying pressurized fluid. The fluid may also be the same fluid which first performs radial expansion of the sealing element 36 and then checks the bottle, being emitted from the nozzle 35 and then introduced into the bottle.

As can be seen by way of example in Figure 9, the test probe is connected to controlled pressure means 40 so as to introduce the pressurized fluid into the bottle 80. These means may be formed by a suitable electrovalve to which the pressurized is supplied from a suitable source 41.

Measurement means 42 suitable for measuring at least one significant parameter of the pressurized fluid supplied to the bottle 80 may also be provided. A comparison unit 43 receives the measurement from the measurement means 42 and compares it with a corresponding reference parameter which should be recorded in the event of the bottle not having leakage defects.

The measurement means 42 and the comparison unit 43 basically form a control unit 44 which forms part of the control system 32 and which emits a defect signal 45 if the check shows that the bottle has a leakage.

The measurement means 42 may be for example formed by a suitable known sensor for measuring the at least one significant parameter selected.

The significant parameters considered may be for example one or more of the following: the volume of the pressurized fluid supplied to the bottle 80, the volume of the pressurized fluid supplied to the bottle 80 per unit of time, and/or the pressure which is formed inside the bottle 80 per unit of time.

For example, if the selected parameter is the pressure, a known pressure sensor may be used. If, in addition or alternatively, the selected parameter is the fluid volume supplied, a known flow measuring device, or the like, may be used.

In particular, the volume of the fluid which is supplied to the bottle 80 per unit of time is usually limited and is strictly dependent on the said volume of the bottle 80. In this case the anomaly signaled by the control circuit 44 may be a fluid volume measurement which is greater than the predetermined reference value. In fact, if, per unit of time, a greater volume of fluid supplied is measured, then it may be deduced that there is a leakage at an undefined point of the circuit formed by the pressure means 40 and the bottle 80.

In the same way, the pressure which is formed inside the bottle 80 over time usually follows a known trend. In this case, the anomaly signaled by the control circuit 44 may be a pressure measurement which is lower than the predetermined reference value. In fact, if the measurement deviates substantially from the known trend, typically reaching pressure values lower than those expected, then it may be deduced that there is a leakage at an undefined point of the circuit consisting of the pressure means 40 and the bottle 80.

In accordance with the invention, the sealing element 36 is designed to seal the mouth 82 so as to ensure that there are no pressurized fluid leakages along the point of contact between the said testing stopper 24 and the moth 82 of the bottle 80. This feature is such that any anomaly detected by the control circuit 44 must relate to a leakage of the bottle 80 and therefore a defect therein.

Although the constructional form of the test probe end described above has been found to be preferable for the sealing efficiency and subsequent disengagement from the bottle, according to some embodiments the sealing element may also be formed as a test cap or stopper made of elastomer material and designed so that it can be pressed axially against the edge of the mouth 82 in order to seal it.

This is shown schematically by way of example in Figure 10.

The test cap/stopper or sealing element 36 may also be alternatively designed with a frustoconical form so that it forms a seal inside the neck of the bottle by means of a simple axial thrust.

Other ways of designing the test cap/stopper or the sealing element are possible and the person skilled in the art may choose that which is best suited for the specific needs.

In accordance with certain embodiments, the control circuit 44 signals any anomalies by means of a suitable alarm signal (for example by means of an optical and/or acoustic signaler 46) calling for action on the part of an operator who removes the bottle 80 found to be defective. In the diagram shown in Figure 9, this alarm signal is provided by a lamp, but it is obvious that the person skilled in the art may choose other alarm systems, such as an acoustic signal or a message displayed on a user interface.

The control circuit 44 may also advantageously signal the anomaly to an actuator which independently removes the bottle 80 identified as being defective, without waiting for any action on the part of an operator.

For example, in the advantageous embodiment shown in Figure 6, when the bottles reach the checking station, the control system 32 activates the test probes so that they are sealingly engaged on the respective bottles (still held by the jaws 23). The control circuit 44 then introduces the test fluid inside the bottles and checks their leak-tightness by means of the set parameter(s). If the outcome of the check is positive, i.e. the bottles are not affected by leakages, the control system 32 activates the pick-up device so as to pick up the bottles, opens the jaws and transfers the bottles onto the line 185.

If the outcome is negative, the bottles are rejected.

In order to reject the bottle(s), opening of the jaws 23 may be for example performed, without simultaneous gripping by the pick-up device 27, so that the bottles fall into the reject container arranged further below. Alternatively, the pick-up device 27 may grip the bottles, but transfer them to the reject position and then release them.

In any case, it may be preferable to reject the whole set of bottles which are checked simultaneously, even if only one of them is defective, so as to keep the checking and rejection system simpler. The rejection of an entire set of bottles (for example five bottles) does not affect substantially the cost of production of the bottles which are made usually in large quantities by the machine 18.

The control circuit 44 may also generate a signal 47 for stopping the machine so as to interrupt the production operations in the case where the defective bottles exceed a predefined number. This number may also be programmed so as to refer to a certain time unit or a predefined number of machine cycles or bottles produced. For example, the machine may stop in the case where defective bottles are detected in two complete machine cycles in sequence, namely when the same mold has passed through the whole series of stations and returned to the discharge station again with a defective bottle.

This allows prompt detection of situations where the leakage defects are not due to random events, but to a fault or a malfunction of the machine itself, resulting in the repeated occurrence of bottles with leakage defects. It is thus possible to interrupt the defective production process in good time, reducing the number of production rejects.

It should be noted that the defective bottles, given the characteristics of the thermoplastic materials, may be usually introduced back into the production cycle as raw material.

At this point it is clear how the predefined objects have been achieved. With a machine and a method according to the invention the defective bottles in the machine may be detected in good time, such that the row of exiting bottles is free from leakage defects. This overcomes the drawbacks of the prior art caused by bottles with leakage defects which are mixed with defect-free bottles. It is thus possible to identify immediately the machine which produces the bottles with defects and therefore for example remove the machine from the production line so that it mat be rapidly checked and if necessary repaired.

As the person skilled in the art will have noted in the light of the description provided above, owing to the fact that the checking station according to the invention operates on the bottle 80 which has been gripped by the neck, leakage defects in any part of the bottle which has been stretched and blown may be detected. The neck of the bottle, which has not undergone stretch blow-molding, but has been produced by means of injection molding, will in fact most likely be free of leakage defects.

During the leak-tightness check the bottle is completely suspended and in this way the test is not falsified by any bearing surfaces, as instead occurs in the prior art.

The machine according to the invention does not require any particular adaptation in order to check bottles with a different shape, since the gripping jaws are the only elements which support the bottle during the checking operation. Usually these jaws are the same jaws which are necessary for the normal production operations in the machine and are already replaced, if necessary, during the mold change-over and machine set-up operations for molding bottles with a particular shape. In order to check a different bottle, it is therefore usually sufficient to set the appropriate comparison parameter (for example the internal volume of the bottle) used for the leak-tightness check.

In some cases, for example following substantial variations in the diameter of the mouth 82 of the bottle 80, it may be necessary to replace the sealing means of the probe, even though the expansion system described above ensures a good sealing action with different mouth diameters ranging between a minimum and maximum diameter.

Basically, owing to the principles of the invention it is possible to process bottles 80 of all shapes and sizes (for example the height of the bottle is of no importance) by replacing only the gripping means 22 and in some cases the sealing means (for example the elastic body 36). Moreover, this type of gripping action performed by the checking station 20 eliminates entirely the problems associated with the solutions of the prior art, such as falling of the bottles 80 on the conveyor line, failure to detect defects on the bottom of the bottle, the distortions of the bottle caused by the axial load of the testing system acting on a bottle resting on a surface, etc.

It should also be noted, among other things, that the cycle time of the machine 18 is not altered by the presence of the checking station 20. In fact, the latter, owing to its particular structure, in order to complete the inspection of a single set of bottles 80 takes the same amount of time as that which the machine already takes to carry out, in parallel, a production step.

Any reject operation is easily integrated into the bottle pick-up operation needed to transfer the bottles onto the machine output line. The normal operating times of the machine are therefore not altered.

The dimensions of the checking system is also contained within the overall dimensions of the machine, which are not substantially different from the dimensions of a conventional machine.

Obviously the description given above of embodiments applying the innovative principles of the present invention is provided by way of example of these innovative principles and must therefore not be regarded as limiting the scope of the rights claimed herein. During the specific implementation of the characteristic features of the present invention only some of the functions or devices described above may be chosen and combined together or, on the other hand, also other known systems for stretch blow-molding or injection stretch blow-molding machines may be combined with the principles of the invention.

For example, in order to facilitate separation of the bottles from the jaws, a pusher device may be provided, said device being extracted from the testing system so as to push against the bottom of the bottle from the inside. Alternatively, the same testing system may generate a thrust by blowing in a suitable amount of test fluid. The bottle reject system may also be different from that shown.

## Claims

1. Machine (18) for the production of bottles (80) by means of stretch blow-molding of preforms, comprising a sequence of processing stations starting with a station (181) for receiving at least one preform for insertion thereof in a mold (188) and ending with a station for releasing the corresponding bottle produced, gripping means being movable between the stations so as to grip the at least one preform in the receiving station and transport it between the processing stations for converting it into the bottle by means of stretch blow-molding and as far as the release station, whereby it comprises, after the processing stations and before the machine outlet, a checking station (20) in which the following are present:
- gripping means (23) for retaining the bottle by its neck;
- a test probe (24) with means suitable for sealing the mouth (82) of the bottle;
- pressure means (26) for introducing into the bottle (80) a pressurized fluid via the test probe;
- measurement means (42) for measuring at least one significant parameter of the pressurized fluid supplied to the bottle (80);
- a control circuit (44) designed to:
- receive the measurement of the at least one parameter from the measurement means (42);
- compare this measurement with a predetermined reference value; and
- signal any anomaly resulting from the comparison and indicating a loss of leak-tightness of the bottle;
the gripping means (23) of the checking station (20) being the gripping means which grip the neck (82) during processing of the bottle (80) between the stations and which move between the stations by means of a carousel (187) from the receiving station to the release station,
**characterized in that**:
in the release station there is a discharging and reject system (21) which is operated by the control circuit so as to convey away the bottles either to an output line (185) or to a reject zone (31).

2. Machine (18) according to claim 1, **characterized in that** the sequence of stations comprises:
- the receiving station (181) where each preform is inserted inside a corresponding mold;
- a heating station (182) where the preform is heated;
- a stretch blow-molding station (183) where a high-pressure fluid is blown into the preform so as to stretch the walls of the preform until they adhere to a mold and thus form the bottle (80);
- a cooling station (184) where the bottle extracted from the mold starts to cool; the machine further comprising an output line (185) for the finished bottles, situated after the cooling station (184), the checking station (20) being situated at the cooling station (184) and before the output line.

3. Machine (18) according to claim 1, **characterized in that** the at least one significant parameter of the pressurized fluid supplied to the bottle (80) is selected from the following:
- the volume of the pressurized fluid supplied to the bottle (80);
- the volume of the pressurized fluid supplied to the bottle (80) per unit of time; and/or
- the pressure which is formed inside the bottle (80) per unit of time.

4. Machine (18) according to claim 1, **characterized in that** the test probe (24) comprises an elastic body (36) designed to be inserted axially into the mouth (82) and to be subsequently expanded radially so as to seal it.

5. Machine (18) according to claim 1, **characterized in that** it comprises an injection molding station (186) for the production of preforms entering the receiving station (181).

6. Machine (18) according to claim 1, **characterized in that** the mold (188) is a mold with several die cavities for simultaneously receiving several preforms and for stretch blow-molding several bottles simultaneously, the checking station comprising a corresponding number of test probes (24).

7. Machine (18) according to claim 1, **characterized in that** the discharging and reject system (21) comprises a pick-up device (27) which is movable between a first position for taking hold of the bottles in the gripping means (23) and a second position for depositing the bottles on the output line (185).

8. Machine (18) according to claim 1, **characterized in that** the test probe (24) is carried by a frame movable controllably between a non-operative position of the test probe and an operative position where the probe passes through the gripping means (23) in the checking station (20) so as to insert the test probe (24) into a bottle supported by the gripping means (23) in the checking station (20).

9. Machine (18) according to claim 1, **characterized in that** the reject zone (31) is situated below the vertical of the checking station.

10. An automatic method for checking bottles (80) in a machine for production thereof by means of stretch blow-molding of preforms, comprising, after formation of the bottle and before exiting of the bottles from the machine, the following checking steps:
- gripping the mouth (82) of the bottle (80);
- sealing the mouth (82);
- introducing into the bottle (80) a pressurized fluid;
- measuring at least one significant parameter of the pressurized fluid supplied to the bottle (80);
- comparing this measurement with a predetermined reference value; and
- signaling automatically any anomaly resulting from the comparison; wherein the preforms are gripped by the neck at the start of production of the bottle and held by the neck with gripping jaws during all the production stages in the machine until after completion of the steps, performed in a checking station, of sealing the mouth (82), introducing into the bottle (80) a pressurized fluid and measuring at least one significant parameter of the pressurized fluid supplied to the bottle (80), **characterized in that** after the checking steps the bottle, depending on the result of the comparison, is transferred automatically to an output line (185) for conveying the bottles away from the machine, or to a reject zone.

11. Method according to claim 10, **characterized in that**, if a predetermined number of anomalies are signaled during a unit of time and/or during a predefined number of machine cycles or in a predefined number of bottles produced, the machine is automatically stopped.

12. Method according to claim 10, **characterized in that** the reject zone is arranged underneath the vertical of the checking station and, in order to transfer the bottle to the reject zone, the gripping jaws are opened and the bottle falls into the reject zone.

## Patentansprüche

1. Maschine (18) für die Produktion von Flaschen (80) mittels Streckblasformung von Vorformlingen, mit einer Sequenz von Bearbeitungsstationen, die mit einer Station (181) zum Aufnehmen zumindest eines Vorformlings zur Einfügung davon in eine Form (188) beginnt und mit einer Station zum Ausgeben der entsprechenden produzierten Flasche endet, bei der ein Greifmittel zwischen den Stationen zum Ergreifen des mindestens einen Vorformlings in der Aufnahmestation und Transportieren desselben zwischen den Bearbeitungsstationen zum Umwandeln desselben in die Flasche mittels Streckblasformung und bis zu der Ausgabestation bewegbar ist, wobei sie, nach den Bearbeitungsstationen und vor dem Maschinenausgang, eine Prüfstation (20) aufweist, in der das Folgende vorliegt:
- ein Greifmittel (23) zum Halten der Flasche an ihrem Hals;
- eine Testsonde (24) mit einem zum Abdichten des Munds (82) der Flasche geeigneten Mittel;
- ein Druckmittel (26) zum Einbringen eines mit Druck beaufschlagten Fluids in die Flasche (80) über die Testsonde;
- ein Messmittel (42) zum Messen mindestens eines signifikanten Parameters des mit Druck beaufschlagten Fluids, das der Flasche (80) zugeführt wird;
- eine Steuerungsschaltung (44) die dazu ausgebildet ist:
- die Messung des mindestens einen Parameters von dem Messmittel (42) zu empfangen;
- diese Messung mit einem vorbestimmten Referenzwert zu vergleichen; und
- jede Anomalie, die sich aus dem Vergleich ergibt und einen Verlust einer Leckdichtigkeit der der Flasche angibt, zu signalisieren;
bei der das Greifmittel (23) der Prüfstation (20) das Greifmittel ist, das den Hals (82) während der Bearbeitung der Flasche (80) zwischen den Stationen ergreift und das sich zwischen den Stationen mittels eines Karussells (187) von der Aufnahmestation zu der Ausgabestation bewegt,
**dadurch gekennzeichnet, dass**:
es in der Ausgabestation ein Abgabe- und Aussortierungssystem (21) gibt, das durch die Steuerungsschaltung zum Wegbefördern der Flaschen entweder zu einer Ausgabelinie (185) oder zu einer Aussortierungszone (31) betrieben wird.

2. Maschine (18) nach Anspruch 1, **dadurch gekennzeichnet, dass** die Sequenz von Stationen aufweist:
- die Aufnahmestation (181), wo jeder Vorformling innerhalb einer entsprechenden Form eingefügt wird;
- eine Erhitzungsstation (182), wo der Vorformling erhitzt wird;
- eine Streckblasformungsstation (183), wo ein Hochdruckfluid in den Vorformling geblasen wird, so dass die Wände des Vorformlings gestreckt werden, bis sie an einer Form anhaften, und somit die Flasche (80) ausgebildet wird;
- eine Abkühlungsstation (184), wo die Flasche, die aus der Form extrahiert wird, beginnt abzukühlen;
welche Maschine ferner eine Ausgabelinie (185) für die fertiggestellten Flaschen aufweist, die nach der Abkühlungsstation (184) gelegen ist, bei der die Prüfstation (20) an der Abkühlungsstation (184) und vor der Ausgabelinie gelegen ist.

3. Maschine (18) nach Anspruch 1, **dadurch gekennzeichnet, dass** der mindestens eine signifikante Parameter des mit Druck beaufschlagten Fluids, das der Flasche (80) zugeführt wird, aus dem Folgenden ausgewählt ist:
- dem Volumen des mit Druck beaufschlagten Fluids, das der Flasche (80) zugeführt wird;
- dem Volumen des mit Druck beaufschlagten Fluids, das der Flasche (80) pro Zeiteinheit zugeführt wird; und/oder
- dem Druck, der innerhalb der Flasche (80) pro Zeiteinheit ausgebildet wird.

4. Maschine (18) nach Anspruch 1, **dadurch gekennzeichnet, dass** die Testsonde (24) einen elastischen Körper (36) aufweist, der dazu ausgebildet ist, axial in den Mund (82) eingefügt zu werden und anschließend radial ausgedehnt zu werden, so dass er ihn abdichtet.

5. Maschine (18) nach Anspruch 1, **dadurch gekennzeichnet, dass** sie eine Spritzgussstation (186) für die Produktion von Vorformlingen, die in die Aufnahmestation (181) eintreten, aufweist.

6. Maschine (18) nach Anspruch 1, **dadurch gekennzeichnet, dass** die Form (188) eine Form mit mehreren Formhohlräumen zum simultanen Aufnehmen mehrerer Vorformlinge und zur simultanen Streckblasformung mehrerer Flaschen ist, bei der die Prüfstation eine entsprechende Anzahl von Testsonden (24) aufweist.

7. Maschine (18) nach Anspruch 1, **dadurch gekennzeichnet, dass** das Abgabe- und Aussortierungssystem (21) eine Aufsammelvorrichtung (27) aufweist, die zwischen einer ersten Position zum Ergreifen der Flaschen in dem Greifmittel (23) und einer zweiten Position zum Absetzen der Flaschen auf der Ausgabelinie (185) bewegbar ist.

8. Maschine (18) nach Anspruch 1, **dadurch gekennzeichnet, dass** die Testsonde (24) durch einen Rahmen getragen wird, der zwischen einer inaktiven Position der Testsonde und einer aktiven Position, wo die Sonde durch das Greifmittel (23) in der Prüfstation (20) passiert, so dass die Testsonde (24) in eine Flasche, die durch das Greifmittel (23) in der Prüfstation (20) abgestützt wird, eingefügt wird, steuerbar bewegbar ist.

9. Maschine (18) nach Anspruch 1, **dadurch gekennzeichnet, dass** die Aussortierungszone (31) unter der Vertikalen der Prüfstation gelegen ist.

10. Automatisches Verfahren zum Prüfen von Flaschen (80) in einer Maschine zur Produktion davon mittels Streckblasformung von Vorformlingen, mit, nach Ausbildung der Flasche und vor Austreten der Flaschen aus der Maschine, den folgenden Prüfschritten:
- Ergreifen des Munds (82) der Flasche (80);
- Abdichten des Munds (82);
- Einbringen eines mit Druck beaufschlagten Fluids in die Flasche (80);
- Messen mindestens eines signifikanten Parameters des mit Druck beaufschlagten Fluids, das der Flasche (80) zugeführt wird;
- Vergleichen dieser Messung mit einem vorbestimmten Referenzwert; und
- automatisches Signalisieren jeder Anomalie, die sich aus dem Vergleich ergibt; bei dem die Vorformlinge zu dem Beginn einer Produktion der Flasche an dem Hals ergriffen werden und während aller Produktionsstufen in der Maschine bis nach Abschluss der Schritte, die in einer Prüfstation durchgeführt werden, eines Abdichtens des Munds (82), Einbringens eines mit Druck beaufschlagten Fluids in die Flasche (80) und Messens mindestens eines signifikanten Parameters des mit Druck beaufschlagten Fluids, das der Flasche (80) zugeführt wird, mit Greifklauen an dem Hals gehalten werden, **dadurch gekennzeichnet, dass** nach den Prüfschritten die Flasche, abhängig von dem Ergebnis des Vergleichs, automatisch zu einer Ausgabelinie (185) zum Befördern der Flaschen weg von der Maschine oder zu einer Aussortierungszone transferiert wird.

11. Verfahren nach Anspruch 10, **dadurch gekennzeichnet, dass**, falls eine vorbestimmte Anzahl von Anomalien während einer Zeiteinheit und/oder während einer vordefinierten Anzahl von Maschinenzyklen oder bei einer vordefinierten Anzahl produzierter Flaschen signalisiert wird, die Maschine automatisch gestoppt wird.

12. Verfahren nach Anspruch 10, **dadurch gekennzeichnet, dass** die Aussortierungszone unterhalb der Vertikalen der Prüfstation angeordnet ist und, zum Transferieren der Flasche zu der Aussortierungszone, die Greifklauen geöffnet werden und die Flasche in die Aussortierungszone fällt.

## Revendications

1. Machine (18) pour la production de bouteilles (80) au moyen du moulage par étirage-soufflage de préformes, comprenant une séquence de stations de traitement, commençant par une station (181) pour recevoir au moins une préforme pour son insertion dans un moule (188) et se terminant par une station pour libérer la bouteille produite correspondante, des moyens de préhension étant mobiles entre les stations afin de saisir la au moins une préforme dans la station de réception et la transporter entre les stations de traitement pour la transformer en bouteille au moyen du moulage par étirage-soufflage et jusqu'à la station de libération, moyennant quoi elle comprend, après les stations de traitement et avant la sortie de machine, une station de vérification (20) dans laquelle les éléments suivants sont présents :
des moyens de préhension (23) pour retenir la bouteille par son goulot ;
une sonde de test (24) avec des moyens appropriés pour sceller l'embouchure (82) de la bouteille ;
des moyens de pression (26) pour introduire dans la bouteille (80), un fluide sous pression via la sonde de test ;
des moyens de mesure (42) pour mesurer au moins un paramètre significatif du fluide sous pression amené à la bouteille (80) ;
un circuit de commande (44) conçu pour :
recevoir la mesure du au moins un paramètre des moyens de mesure (42) ;
comparer cette mesure avec une valeur de référence prédéterminée ; et
signaler toute anomalie résultant de la comparaison et indiquant une perte d'étanchéité aux fuites de la bouteille ;
les moyens de préhension (23) de la station de vérification (20) étant les moyens de préhension qui saisissent le goulot (82) pendant le traitement de la bouteille (80) entre les stations et qui se déplacent entre les stations au moyen d'un carrousel (187) de la station de réception à la station de libération,
**caractérisée en ce que** :
dans la station de libération, il y a un système de décharge et de rejet (21) qui est actionné par le circuit de commande pour transporter les bouteilles vers une ligne de sortie (185) ou vers une zone de rejet (31).

2. Machine (18) selon la revendication 1, **caractérisée en ce que** la séquence de stations comprend :
la station de réception (181) dans laquelle chaque préforme est insérée à l'intérieur d'un moule correspondant ;
une station de chauffage (182) dans laquelle la préforme est chauffée ;
une station de moulage par étirage-soufflage (183) dans laquelle un fluide haute pression est soufflé dans la préforme pour étirer les parois de la préforme jusqu'à ce qu'elles adhèrent à un moule et forment ainsi la bouteille (80) ;
une station de refroidissement (184) dans laquelle la bouteille extraite du moule commence à refroidir ;
la machine comprenant en outre une ligne de sortie (185) pour les bouteilles finies, située après la station de refroidissement (184), la station de vérification (20) étant située au niveau de la station de refroidissement (184) et avant la ligne de sortie.

3. Machine (18) selon la revendication 1, **caractérisée en ce que** le au moins un paramètre significatif du fluide sous pression amené à la bouteille (80) est sélectionné parmi les éléments suivants :
le volume du fluide sous pression amené à la bouteille (80) ;
le volume du fluide sous pression amené à la bouteille (80) par unité de temps ; et/ou
la pression qui est formée à l'intérieur de la bouteille (80) par unité de temps.

4. Machine (18) selon la revendication 1, **caractérisée en ce que** la sonde de test (24) comprend un corps élastique (36) conçu pour être inséré axialement dans l'embouchure (82) et pour subir ensuite une expansion radialement afin de le sceller.

5. Machine (18) selon la revendication 1, **caractérisée en ce qu'**elle comprend une station de moulage par injection (186) pour la production de préformes entrant dans la station de réception (181).

6. Machine (18) selon la revendication 1, **caractérisée en ce que** le moule (188) est un moule avec plusieurs cavités de moulage pour recevoir simultanément plusieurs préformes et pour mouler par étirage-soufflage plusieurs bouteilles simultanément, la station de vérification comprenant un nombre correspondant de sondes de test (24).

7. Machine (18) selon la revendication 1, **caractérisée en ce que** le système de décharge et de rejet (21) comprend un dispositif de prélèvement (27) qui est mobile entre une première position pour saisir les bouteilles dans les moyens de préhension (23) et une seconde position pour déposer les bouteilles sur la ligne de sortie (185).

8. Machine (18) selon la revendication 1, **caractérisée en ce que** la sonde de test (24) est portée par un bâti mobile de manière contrôlable entre une position non opérationnelle de la sonde de test et une position opérationnelle dans laquelle la sonde passe à travers les moyens de préhension (23) dans la station de vérification (20) afin d'insérer la sonde de test (24) dans une bouteille supportée par les moyens de préhension (23) dans la station de vérification (20).

9. Machine (18) selon la revendication 1, **caractérisée en ce que** la zone de rejet (31) est située au-dessous de la verticale de la station de vérification.

10. Procédé automatique pour vérifier les bouteilles (80) dans une machine pour leur production au moyen du moulage par étirage-soufflage de préformes, comprenant, après la formation de la bouteille et avant la sortie des bouteilles de la machine, les étapes de vérification suivantes consistant à :
saisir l'embouchure (82) de la bouteille (80) ;
sceller l'embouchure (82) ;
introduire un fluide sous pression dans la bouteille (80) ;
mesurer au moins un paramètre significatif de fluide sous pression amené à la bouteille (80) ;
comparer cette mesure avec une valeur de référence prédéterminée ; et
signaler automatiquement toute anomalie résultant de la comparaison ; dans lequel les préformes sont saisies par le goulot au début de la production de la bouteille et maintenues par le goulot avec des mâchoires de préhension pendant tous les stades de production dans la machine jusqu'après achèvement des étapes, réalisées dans une station de vérification, consistant à sceller l'embouchure (82), à introduire dans la bouteille (80), un fluide sous pression et à mesurer au moins un paramètre significatif du fluide sous pression amené à la bouteille (80), **caractérisé en ce qu'**après les étapes de vérification, la bouteille, en fonction du résultat de la comparaison, est transférée automatiquement sur une ligne de sortie (185) pour transporter les bouteilles à distance de la machine ou vers une zone de rejet.

11. Procédé selon la revendication 10, **caractérisée en ce que**, si un nombre prédéterminé d'anomalies sont signalées pendant une unité de temps et/ou pendant un nombre prédéfini de cycles de machine ou dans un nombre prédéfini de bouteilles produites, la machine est automatiquement arrêtée.

12. Procédé selon la revendication 10, **caractérisé en ce que** la zone de rejet est agencée au-dessous de la verticale de la station de vérification et, afin de transférer la bouteille vers la zone de rejet, les mâchoires de préhension sont ouvertes et la bouteille tombe dans la zone de rejet.
